# EUROPEAN PATENT SPECIFICATION

(11) **EP 4 356 045 B1**
(45) Date of publication and mention of the grant of the patent: **25.03.2026**
(21) Application number: 22837918.6
(22) Date of filing: 04.07.2022
(51) Int. Cl.: F23G 5/46, F23G 5/50, F23M 5/00, F23L 5/02, F23G 5/12, F23G 5/033, F23G 5/24, F23G 5/44, F23J 15/02

(54) **ECO-FRIENDLY ULTRA-HIGH TEMPERATURE THERMAL DECOMPOSITION SYSTEM FOR WASTE-TO-ENERGY**
UMWELTFREUNDLICHES ULTRAHOCHTEMPERATUR-WÄRMEZERSETZUNGSSYSTEM FÜR ABFALL IN ENERGIE UMWANDLUNG
SYSTÈME ÉCOLOGIQUE DE DÉCOMPOSITION THERMIQUE À ULTRA-HAUTE TEMPÉRATURE POUR VALORISATION ÉNERGÉTIQUE DES DÉCHETS

(30) Priority: 05.07.2021 KR 20210088168
(43) Date of publication of application: 24.04.2024
(73) Proprietor: Park, Moon Joo, Anseong-si Gyeonggi-do 17548 (KR)
(72) Inventor: Park, Moon Joo, Anseong-si Gyeonggi-do 17548 (KR)
(74) Representative: You Patent
(86) International application number: PCT/KR2022/009627
(87) International publication number: WO 2023/282566

(56) References cited:
- EP-A1- 3 324 117
- JP-B2- 6 037 173
- KR-A- 20070 036 265
- KR-B1- 101 055 854
- KR-B1- 102 197 126
- KR-B1- 102 340 108
- US-B1- 6 962 118

## Description

### Technical Field

The present invention relates to a eco-friendly ultra-high temperature thermal decom- position system for waste-to-energy, more specifically, where its thermal decom-position chamber, made with special castable mixture designed to endure up to 1,800°C, maintains the ultra-high temperature above 850°C and ten (10) layers of air curtains, made by a double-layered air-curtain maker installed at the center of the thermal decomposition chamber, allow the input materials to be completely de- composed without any auxiliary fuel and air pollutants to be completely decomposed by trapping them inside the thermal decomposition chamber with ultra-high tem- perature above 850°C for more than two (2) seconds of residence time. Central oil nozzles and lower oil nozzles, installed on the center part and the lower part of inner wall of the thermal decomposition chamber to aim the central part and the bottom part of the thermal decomposition chamber, evenly spray the auxiliary fuel when necessary so the input materials with different conditions, sizes, and hydration level, are completely decomposed. Treatment capacity is improved through outer shredder installed at the left side of the thermal decomposition chamber, homogenizing the inputmaterials with different conditions, sizes, and hydration level prior to feeding, and screw conveyor connecting the outer shredder and the thermal decomposition chamber automatically inputting the input materials. The input materials and ash that are not fully decomposed yet piled up at the bottom of the thermal decomposition chamber are shredded by inner shredder installed at the bottom part of the thermal decomposition chamber. After being shredded by the inner shredder, they are re-input into the thermal decomposition chamber via screw conveyor connecting the inner shredder and the thermal decomposition chamber, thus even the ash is also completely decomposed. Thermal generation chamber is composed around the thermal decomposition chamber and on the upper cover of the thermal decomposition chamber where thermal generation modules are installed within to effectively collect the waste heat generated from the thermal decomposition process so as to generate electricity. The waste heat generated from the thermal decomposition process also is used to generate steam via steam chamber installed within the upper cover of the thermal decomposition chamber, where such steam is sent to separately composed boiler and steam turbine via steam pipe to generate further electricity. The dust collector and the monitoring device are located at the right side of the thermal decomposition chamber with their collecting holes at the top part of inner wall of the thermal decomposition chamber to collect thedust when necessary and the air samples to monitor the results of the thermal decom- position process in real time.

### Background Art

The modem society is experiencing a sharp increase of waste generation caused by various factors including increasing population, urbanization, and commercialization. The generation of plastic wastes are especially drastic. According to UNEP, the weightof waste plastics in the ocean is equivalent with the weight of entire sea creatures by 2050.

In general, the most advertised and prioritized ways of disposal of wastes are segregation and recycling. However, the actual recycling rate is extremely low simply because recycling is very hard in reality: the wastes is rinsed and not con- taminated to be recycled. Thus, most of the wastes are being disposed by sanitary landfills or big-scaled incinerators. Environmental problems and social problems from these ways of disposal have become issues for many countries. Sanitary landfill requires a huge amount of land, numbers of heavy equipment for operation and maintenance, and a huge initial investment for operation and management, while it also causes severe soil pollution, water pollution and air pollution by generating landfill gas, biogas, greenhouse gas, leachate, and other pollutants. Big-scaled incinerators also cause serious pollution because of air pollutants generated from the incineration, whichleads to the huge initial investment cost for installation, operation, and management because the facility inevitably becomes enlarged with multiple combustion chambers and back-end pollution control system to remove air pollutants as well as the ash treatment facility to prevent the soil pollution that untreated ash causes.

EP3324117A1 discloses a high-temperature pyrolysis incineration apparatus is provided, and in order to solve a structural problem of a high-temperature pyrolysis incineration apparatus that is suggested by the present applicant, internal area encroachment of a combustion chamber by a blast pipe is minimized, and even if a wall of the combustion chamber does not have a large thickness, the wall of the combustion chamber is improved in a structure that can be strongly constructed, waste heat recovery can be innovatively performed, and an incineration processing material can be completely burned without an unburned residue in a short time. For this purpose, a high-temperature pyrolysis incineration apparatus that forcedly supplies external air to a combustion chamber while burning an incineration processing material that is injected therein at a high temperature within the combustion chamber that is isolated from the outside, wherein an air-supply tube 10 is fixedly disposed at the center of the combustion chamber 2, a fuel supply pipe 14 is installed at an upper edge of the inside of the combustion chamber 2, the bottom of a lower portion thereof is formed with a punching plate 28, a stirring rod 30 that rotates using the air-supply tube 10 as a fixing shaft is disposed at the center of the bottom thereof, and at one side of the outside of the combustion chamber 2, a heat recovery device 4 is disposed, and a circulation pipe 48 is extended from one side of the lid 12 of the combustion chamber 2 to the outside to return to a location corresponding to an upper portion of the stirring rod 30 in a wall of the combustion chamber 2 via the inside of the heat recovery device 4.

KR102197126B1 discloses the present invention relates to a fuel supply device for combustion used in an incinerator, the configuration of which comprises: a blower pen disposed adjacent to an incinerator body; An air spray unit for injecting the air supplied from the songpen into the incineration body; And a cover blocking the end of the air injection unit, wherein the air injection unit includes a plurality of injection nozzles arranged along the height direction of the incineration body.

Because of the problems of these conventional ways of disposal, various inventions such as low-temperature thermal decomposition system have been proposed; however, they still cause air pollution, even when they are enlarged and complicated with secondary combustion chamber in addition to the primary combustion chamber and theback-end pollution control system attached to the main system. The ash treatment system is still required, too. Other problems such as failing to evenly or completely combusts input materials with different conditions, sizes, and hydration level also occur, which requires a huge amount of auxiliary fuel to complement the system. Such use of auxiliary fuel ultimately reduces the efficacy and economic benefits of having alternative disposal system. Separate tools are also required to forcibly mix and combust the wastes piled up at the bottom part of the chamber, where the auxiliary fuelcannot reach. Moreover, when the wastes are shredded prior to feeding, it requires additional shredding process and equipment. Lastly, the waste heat generated during the operation are not utilized.

### Disclosure of Invention

### Technical Problem

This present invention is proposed to resolve the problems mentioned above.

This present invention relates to a eco-friendly ultra-high temperature thermal de- composition system for waste-to-energy, where its thermal decomposition chamber, made with special castable mixture designed to endure up to 1,800°C, maintains the ultra-high temperature above 850°C and ten (10) layers of air curtains made by air- curtain maker installed at the center of the thermal decomposition chamber allows theinput materials to be completely decomposed without any auxiliary fuel and air pollutants to be completely decomposed by trapping them inside the thermal decom- position chamber with ultra-high temperature above 850°C for more than two (2) seconds of residence time.

This present invention relates to a eco-friendly ultra-high temperature thermal de- composition system for waste-to-energy, where its central oil nozzles and lower oil nozzles, installed on the center part and the lower part of the inner wall of the thermal decomposition chamber respectively, each installed to aim the central part and the bottom part of the chamber, evenly spray the auxiliary fuel when necessary so the input materials with different conditions, sizes, and hydration level, are completely decomposed; where its treatment efficacy is improved through the outer shredder installed at the left side of the thermal decomposition chamber, homogenizing the inputmaterials with different conditions, sizes, and hydration level, and screw conveyor connecting the outer shredder and the thermal decomposition chamber automatically inputting the input materials; and where its inner shredder installed at the bottom part of the thermal decomposition chamber shreds the input materials and ash that are not fully decomposed yet piled up at the bottom of the thermal decomposition chamber so the screw conveyor connecting the inner shredder and the thermal decomposition chamber can re-input such materials back to the system, thus even the ash is also completely decomposed.

The present invention relates to a eco-friendly ultra-high temperature thermal decom-position system for waste-to-energy, where its thermal generation chamber is composed around the thermal decomposition chamber and on the upper cover of the thermal decomposition chamber and has thermal generation modules installed within effectively collect the waste heat generated from thermal decomposition process to generate electricity and the waste heat is also used to generate steam via the steam chamber installed within the upper cover of the thermal decomposition chamber, where such steam is sent to separately composed boiler and steam turbine via the steam pipeto generate further electricity.

The present invention relates to a eco-friendly ultra-high temperature thermal decomposition system for waste-to-energy, where its dust collector and the monitoring device are located at the right side of the thermal decomposition chamber with their collectingholes at the top part of inner wall of the thermal decomposition chamber to collect the dust when necessary and the air samples to monitor the results of the thermal decom- position process in real time.

### Solution to Problem

To elaborate further on the distinct compositions of this present invention in order to achieve the above purposes, this present invention is distinctively composed with the thermal decomposition chamber, in a cylindrical shape made with special castable mixture designed to endure up to 1,800°C, which maintains ultra-high temperature above 850°C even without any auxiliary fuel; the air-curtain maker in a double-layereddesign, with the outer pipe and the inner pipe, installed at the center of the thermal de- composition chamber with ten (10) vertical levels of air inlets, where 1st to 9th air inlets are connected to the inner pipe and the top-most 10th air inlet is connected to theouter pipe, where air inlets in each level are placed horizontally with identical distance between them, to create a total of ten (10) layers of air curtains so as to completely decompose air pollutants by trapping them within the thermal decomposition chamber with a ultra-high temperature above 850°C for more than two (2) seconds of residence time and prevent any air pollution; the central oil nozzles and the lower oil nozzles installed on the center part and the lower part of the inner wall of the thermal decom- position chamber respectively to evenly spray auxiliary fuel when necessary, es-pecially when the input materials are of low calorific value or high hydration level; theouter shredder installed at the left side of the thermal decomposition chamber ho-mogenizing the input materials by shredding them; the inner shredder installed at the bottom part of the thermal decomposition chamber shredding the input materials and ash remaining at the bottom of the thermal decomposition chamber to ensure complete decomposition of input materials, even the ash; the screw conveyor automatically feeding the wastes and ashes shredded by outer and inner shredders back to the thermal decomposition chamber; the thermal generation chamber installed around the thermal decomposition chamber and on the upper cover of the thermal decomposition chamber to generate electricity through thermal generation modules collecting waste heat generated from the thermal decomposition process; the steam chamber installed on the upper cover of the thermal decomposition chamber to generate further electricity by producing steam using waste heat and sending such heat to the separately installed boiler and steam turbine via the steam pipe; the dust collector to collect the dust at thetop part of the thermal decomposition chamber when necessary; and the monitoring device installed on the right side of the thermal decomposition chamber to monitor theresults of thermal decomposition process in real time.

This present invention is distinctively composed with the air-curtain maker in a double- layered design with the outer pipe and the inner pipe, where the inner pipe is connected to the inner blower installed on the right side of the thermal decomposition chamber and the outer pipe is connected to the outer blower installed on the right side of the thermal decomposition chamber. Such air-curtain maker has ten (10) vertical levels of air inlets, where air inlets in each level are placed horizontally, where the air inlets from the 1st to the 9th level, the 1st being the lowest, are connected to the outer pipe to create nine (9) layers of air curtains within the thermal decomposition chamber, while the top-most air inlet on the 10th level is connected to the inner pipe to create thetop-most one (1) layer of air curtain, controlling and managing the below nine (9) layers of air curtains. Such ten (10) layers of air curtains trap both the input materials and the air pollutants generated from the thermal decomposition process within the thermal decomposition chamber with ultra-high temperature of 850°C for more than two (2) seconds of residence time until they are completely decomposed.

This present invention is distinctively composed with the central oil nozzles and the lower oil nozzles where the central oil nozzles are installed on the center part of inner wall of the thermal decomposition chamber with three (3) nozzles, connected with auxiliary fuel tank via central oil nozzles supply pipe, aiming at the central part of the thermal decomposition chamber, while the lower oil nozzles are installed on the lowerpart of inner wall of the thermal decomposition chamber with three (3) nozzles, connected with auxiliary fuel tank via lower oil nozzles supply pipe, aiming at the bottom part of the thermal decomposition chamber. The central oil nozzles and the lower oil nozzles aim at the central and bottom part of the thermal decomposition chamber respectively and evenly spray auxiliary fuel without leaving any blind spot. The amount of auxiliary fuel sprayed into the thermal decomposition chamber is controlled by the central oil nozzles control valve and the lower oil nozzles control valve.

This present invention is distinctively composed with the outer shredder installed at the left side of thermal decomposition chamber, connected with the thermal decom- position chamber via screw conveyor, to homogenize the input materials with differentconditions, sizes, and hydration level, by shredding them prior to being fed into the thermal decomposition chamber, so as to reduce the volume of the input materials and improve the treatment capacity, while the inner shredder is installed at the bottom part of the thermal decomposition chamber, connected with the thermal decomposition chamber via screw conveyor, to shred the input materials that are not fully decomposedyet remaining and piled up at the bottom of the thermal decomposition chamber as wellas the ash, so as to the screw conveyor connecting the inner shredder and the thermal decomposition chamber can re-input such materials back to the system, thus even the ash is completely decomposed. The screw conveyor is composed of vertical screw conveyor and horizontal screw conveyor, thus it can automatically re-input shredded input materials and ash from the outer shredder and the inner shredder. The screw conveyor is equipped with an extra layer of cooling pipe since the ash and remaining input materials at the bottom of the thermal decomposition chamber are still hot after being shredded by the inner shredder.

This present invention is distinctively composed with the thermal generation chamber, installed around the thermal decomposition chamber and on the upper cover of the thermal decomposition chamber, used to collect waste heat and generate electricity. More specifically, thermal generation modules are installed within the thermal generation chamber, where such modules effectively collect the waste heat generated from the thermal decomposition process and generate electricity. The thermal generation chamber around the thermal decomposition chamber has its thermal generation modules along the inner walls while the thermal generation chamber on the upper cover of the thermal decomposition chamber has thermal generation module plates on idle space to maximize the number of thermal generation modules attached, so as much waste heat as possible is collected.

This present invention is distinctively composed with the steam chamber, installed onthe upper cover of the thermal decomposition chamber, with water supply pipe on the left side, heating pipe within the steam chamber, and steam pipe on the upper side of the steam chamber. The water is vaporized via waste heat generated from the thermal decomposition process and such steam is sent to separately composed boiler and steamturbine to generate further electricity via steam pipe. More specifically, the water is supplied into the steam chamber via the water supply pipe and is vaporized via waste heat generated from the thermal decomposition chamber, which is accelerated by the heating pipe within the steam chamber. Vaporized steam by waste heat and the heatingpipe is sent to separately composed boiler and steam turbine to generate electricity via the steam pipe.

This present invention is distinctively composed with the dust collector, located at the right side of the thermal decomposition chamber with six (6) dust collecting holes at the top part of inner wall of the thermal decomposition chamber so the dust generated from the thermal decomposition process is collected by dust collecting holesand transferred via dust collecting pipes to the dust collecting chamber.

This present invention is distinctively composed with the monitoring device, located at the right side of the thermal decomposition chamber with one (1) collecting hole at the top part of inner wall of the thermal decomposition chamber so the samples are collected by collecting hole and transferred via monitoring pipe and the monitoring results of the thermal decomposition process are easily confirmed from the monitoringdashboard in real time.

### Advantageous Effects of Invention

This present invention, a eco-friendly ultra-high temperature thermal decomposition system for waste-to-energy, has an effect of complete thermal decomposition of the input materials without auxiliary fuel since its thermal decomposition chamber is madewith special castable mixture designed to endure up to 1,800°C, which makes it capable of maintaining the ultra-high temperature above 850°C inside without any auxiliary fuel.

This present invention has an effect of complete elimination of air pollutants since its air-curtain maker installed at the center of thermal decomposition chamber has ten (10) vertical levels of air inlets which create total of ten (10) layers of air curtains within thethermal decomposition chamber, and such multiple layers of air curtains trap the input materials and air pollutants inside the thermal decomposition chamber with ultra-high temperature above 850°C for more than two (2) seconds of residence time so the air pollutants are also completely decomposed.

This present invention has an effect of complete thermal decomposition of the input materials since its central oil nozzles and lower oil nozzles installed on the inner wallof the thermal decomposition chamber evenly spray auxiliary fuel without any blind spot when needed, especially when the input materials are of different conditions, *sizes,* and hydration level, especially those of low calorific value or high hydration level.

This present invention has an effect of treatment efficacy improvement since its outershredder installed at the left side of the thermal decomposition chamber, connected with the thermal decomposition chamber via a screw conveyor, reduces the volume of the input materials and homogenizes the input materials with different conditions, *sizes,* and hydration level, by shredding them prior to being fed into the thermal de- composition chamber.

This present invention has an effect of complete thermal decomposition of the input materials, even the ash, since its inner shredder installed at the bottom part of the thermal decomposition chamber, connected with the thermal decomposition chamber via screw conveyor, shreds the input materials that are not fully decomposed yet remaining and piled up at the bottom of the thermal decomposition chamber as well asthe ash, so as to the screw conveyor connecting the inner shredder and the thermal decomposition chamber can re-input such materials back to the thermal decompositionchamber, thus even the ash is completely decomposed.

The present invention has an effect of maximization of electricity generation since the invention has two ways of electricity generation: the thermal generation chamber and the steam chamber. Its thermal generation chamber installed around the thermal decomposition chamber and on the upper cover of the thermal decomposition chamber, has the thermal generation modules installed within, to effectively collect the waste heat generated from the thermal decomposition process to generate electricity, as well as its steam chamber installed on the upper cover of the thermal decomposition chamber utilizes waste heat to generate steam via the water supply pipe and the heatingpipe, so as such steam is sent to separately composed boiler and steam turbine to generate even more electricity.

This present invention has an effect of safe and rapid treatment of even infectious and medical wastes while generating electricity, since the invention, being compact and small, is the most suitable waste-to-energy facility for residential area or industrial complexes like a dense apartment complex in Korea and for countries composed of lots of small islands like the Philippines and Indonesia, unlike big and enormous con-ventional waste-to-energy plants which need to be away from the residential or in-dustrial complexes and require huge amount of land. Since the invention treats the input materials in ultra-high temperature above 850°C, every pathogen, bacteria, and virus present within the materials are completely eradicated, which makes the invention the perfect solution for safe and rapid on-site treatment of infectious and medical wastes generated from hospitals, clinics, test centers for infectious diseases, and hospitals, even in advanced countries such as Korea, United States of America, Japan, and European countries.

This present invention has an effect of minimization of dust release and real time monitoring of its environmental impact since its dust collector collects every dust generated from the thermal decomposition process and its monitoring device provides real time monitoring data of the thermal decomposition process.

### Brief Description of Drawings

FIG. 1 is a cross-sectional view showing the inside of a eco-friendly ultra-high tem-perature thermal decomposition system for waste-to-energy according to a first embodiment of the present invention;
FIG. 2 is a cross-sectional view showing the part with air-curtain maker of the present invention;
FIG. 3 is a cross-sectional view showing the part with central and lower oil nozzles of the present invention;
FIG. 4 is a cross-sectional view showing the part with outer and inner shredder with screw conveyor of the present invention;
FIG. 5 is a cross-sectional view showing the part with thermal generation chamber and steam chamber of the present invention;
FIG. 6 is a cross-sectional view showing the part with dust collector and monitoring device of the present invention.

### Description of Reference Numerals

80 Upper Cover
90 Control Panel
100 Thermal Decomposition Chamber
110 Air-curtain Maker
120 Inner Pipe
121 Inner Blower
122 Inner BlowerPipe
123 10th Air Inlet
130 Outer Pipe
131 Outer Blower
132 Outer Blower Pipe
133 Lower Air Inlets
140 Central Oil Nozzles
141 Central Oil Nozzles Control Valve
142 Central Oil Nozzles Supply Pipe
150 Lower Oil Nozzles
151 Lower Oil Nozzles Control Valve
152 Lower Oil Nozzles Supply Pipe
160 Auxiliary Fuel Tank
170 Outer Shredder
180 Inner Shredder
181 Inner Shredder Inspection Door
190 Screw Conveyor
191 Horizontal Screw Conveyor
192 Vertical Screw Conveyor
193 Input Door
194 Cooling Pipe
200 Thermal Generation Chamber
201 Thermal Generation Modules
202 Thermal Generation Module Plates
210 Steam Chamber
211 Water Supply Pipe
212 Heating Pipe
213 Steam Pipe
300 Dust Collector
301 Dust Collecting Holes
302 Dust Collecting Pipes
303 Dust Collecting Chamber
310 Monitoring Device
311 Collecting Hole
312 Monitoring Pipe
313 Monitoring Dashboard

### Best Mode for Carrying out the Invention

This present invention relates to a eco-friendly ultra-high temperature thermal de-composition system for waste-to-energy.

This present invention includes: thermal decomposition chamber 100 made with special castable mixture in a cylindrical shape designed to endure high temperature upto 1,800°C and to maintain ultra-high temperature above 850°C even without any auxiliary fuel; air-curtain maker 110 composed as double-layered design at the center of the thermal decomposition chamber with inner pipe 120 and outer pipe 130 and ten
(10) vertical levels of air inlets designed to create ten (10) layers of air curtains so as to completely decompose air pollutants by trapping them within the thermal decom- position chamber 100 and prevent air pollution; central oil nozzles 140 and lower oil nozzles 150 installed on the inner wall of the thermal decomposition chamber 100 to evenly spray auxiliary fuel when necessary; outer shredder 170 installed at the left sideof the thermal decomposition chamber 100 homogenizing the input materials by shredding them prior to feeding; inner shredder 180 installed at the bottom part of the thermal decomposition chamber 100 shredding the input materials and ash remaining at the bottom of the thermal decomposition chamber 100; screw conveyor 190 auto-matically feeding the input materials and ash shredded by the outer shredder 170 and the inner shredder 180 back to the thermal decomposition chamber 100; thermal generation chamber 200 installed around the thermal decomposition chamber 100 and on the upper cover 80 of the thermal decomposition chamber 100 to generate electricity by collecting waste heat generated from the thermal decomposition process;steam chamber 210 installed within the upper cover 80 of the thermal decomposition chamber 100 to generate further electricity by producing steam using waste heat and sending such heat to the separately installed boil and steam turbine via steam pipe 213;dust collector 300 to collect the dust at the top part of the thermal decomposition chamber 100 when necessary; and monitoring device 310 installed on the right side of the thermal decomposition chamber 100 to monitor the thermal decomposition process.

Hereinafter, embodiments of this present invention is described in detail with reference to the accompanying drawings.

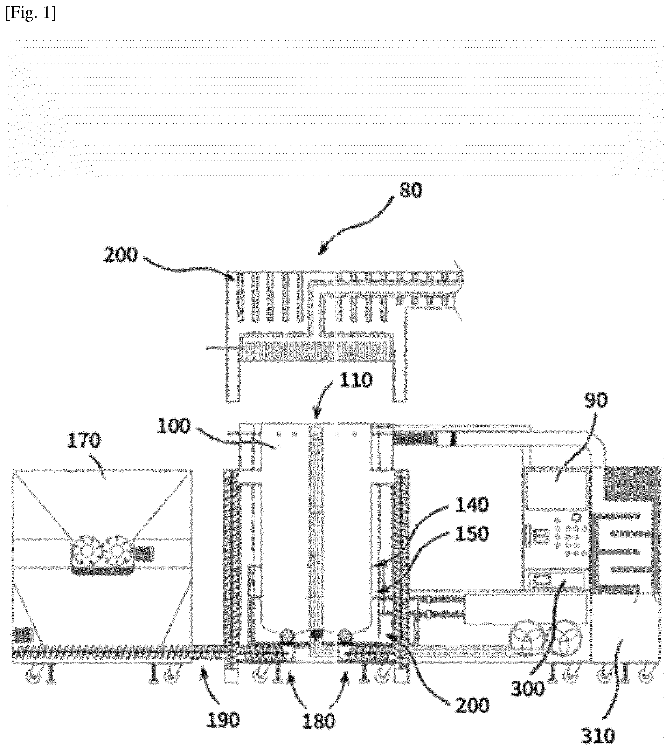

The thermal decomposition chamber 100 is a main element of this present invention, where the process of thermal decomposition itself happens and all the other elements are installed on and around as illustrated in FIG. 1, with the outer shredder 170 found on the left side, the inner shredder 180 on the bottom part of the thermal decompositionchamber 100, the air-curtain maker 100, the central oil nozzles 140 and the lower oil nozzles 150 on the inner wall of the thermal decomposition chamber 100, the thermal generation chamber 200 around the thermal decomposition chamber 100 and on the upper cover 80 of the thermal decomposition chamber 100 where the steam chamber 210 is found as well, and the dust collector 300 and the monitoring device 310 on the right side of the thermal decomposition chamber 100.

The thermal decomposition chamber 100 has a cylindrical shape as illustrated in FIG. 1. The thermal decomposition chamber 100 is made of special castable mixture with excellent heat resistance and acid resistance for longer durability. Particularly, the inner surface of the thermal decomposition chamber 100 is required to withstand an ultra-high temperature above 1,600°C or higher, up to 1,800°C. The outersurface of the thermal decomposition chamber 100 is made of a material with excellent heat insulation capacity, acid resistance, and rust preventive characteristic for longer usage, such material including stainless steel.

The thermal decomposition chamber 100 has the upper cover 80 as illustrated in FIG.1, which is coupled with the upper portion of the thermal decomposition chamber 100 so as the thermal decomposition chamber 100 is closed and opened as needed. When the upper cover 80 is closed, it fits tightly to the outer surface of thermal de-composition chamber 100. Such upper cover 80 is kept open when the input materials are fed via upper opening of the thermal decomposition chamber 100 when necessary. As illustrated in FIG. 1, the upper cover 80 has the thermal generation chamber 200 as well as the steam chamber 210 for power generation function.

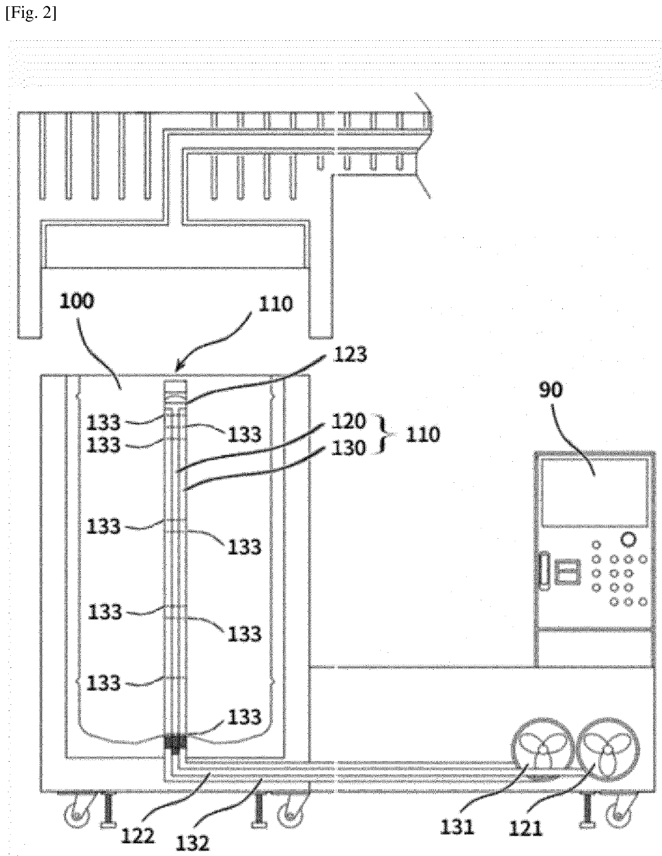

Moving on to FIG. 2, the air-curtain maker 110 is found at the center of thermal decomposition chamber 100. The air-curtain maker 110 is double-layered, as il-lustrated in FIG. 2, with the inner pipe 120 and the outer pipe 130. More specifically, the air-curtain maker 110 is composed with two (2) or more long cylindrical shaped hollow pipes with different heights, which in this present invention embodies two (2) pipes, one being the inner pipe 120 and the other being the outer pipe 130. The air-curtain maker 110 also penetrates through the bottom part of the thermal decom- position chamber 100 as both the inner pipe 120 and the outer pipe 130 are connected to inner blower 121 and outer blower 131, respectively via inner blower pipe 122 andouter blower pipe 132, installed on the right side of the thermal decomposition chamber 100.

It is also required for the air-curtain maker 110 to be made of a material with excellent heat and acid resistance since it is not only a functionally central element of the thermal decomposition process but also a physically central element of the thermal decomposition chamber 100 where the thermal decomposition process is happening, thus the temperature is the highest.

The air-curtain maker 110 has ten (10) vertical levels of air inlets, where air inlets ineach level are placed horizontally with the same distance between each air inlet. The levels of air inlets and number of air inlets in each level is adjusted as needed. Lower air inlets 133, from 1st to 9th level of air inlets, where 1st being the lowest, are connected to the outer pipe 130, blowing the air into the thermal decomposition chamber 100 from the outer blower 131. The top-most air inlet, 10th air inlet 123, is connected to the inner pipe 120, blowing the air into the thermal decomposition chamber from the inner blower 121. As illustrated in FIG. 2, only the outer pipe 130 isvisible from outside as inner pipe 120 is placed inside the outer pipe 130. However, when looked via cross-sectional view, the top part of outer pipe 130 is mostly taken over by enlarged inner pipe 120 so the air coming from the outer blower 131 is only covering the lower air inlets 133, which means from 1st to 9th level air inlets. The top part of the inner pipe 120 is enlarged so it is connected to the 10th air inlet 123 at the top, so as the air from the inner blower 121 directly reaches the 10th air inlet 123 and injects stronger air into the thermal decomposition chamber 100 without the in-terference from the outer blower 131.

The main purpose of the air-curtain maker 110 is to create air curtains, specifically, ten (10) layers of air curtains in this present invention, which is adjusted as needed as well. Such air curtains play a major role in air pollution prevention since they trap not only the input materials but also the air pollutant materials which isgenerated from the thermal decomposition process inside the thermal decomposition chamber 100. The air pollutants like dioxins are also thermally decomposed when theyare exposed to ultra-high temperature above 850°C for more than two (2) seconds of residence time. The air curtains elongate such residence time of air pollutant materials inside the thermal decomposition chamber 100 by literally creating multiple layers of curtains, thus creating barriers, so it is hard for air pollutant materials to escape from the thermal decomposition chamber 100. This eliminates the need for secondary de-composition or combustion chamber which is only needed to achieve such two (2) seconds of residence time. Moreover, such secondary decomposition chamber only causes the system to be unnecessarily bigger and enlarged. Because of the air curtains carefully designed and created by the air-curtain maker 110, the present invention canmaintain its compact size.

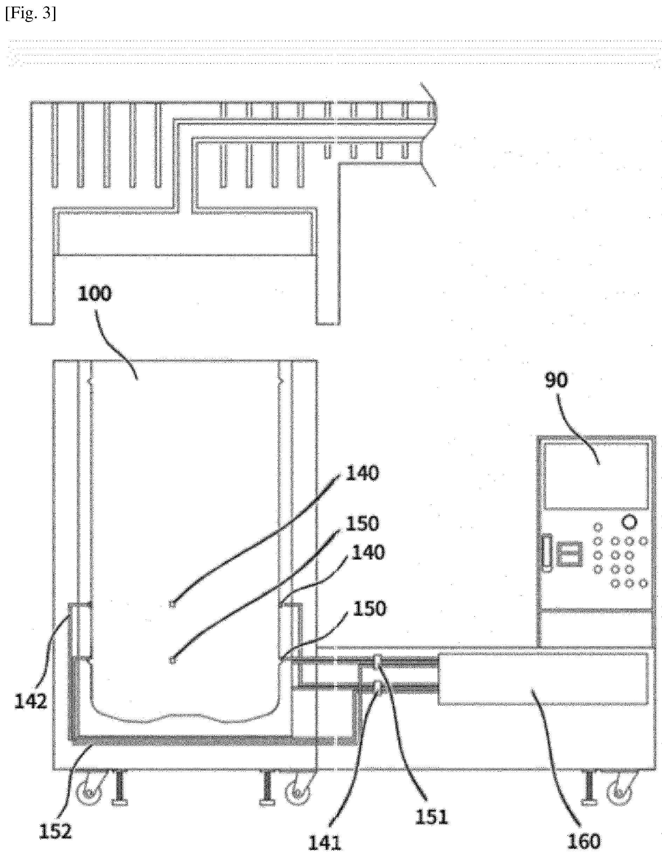

Moving on to FIG. 3, the central oil nozzles 140 and the lower oil nozzles 150 are found on the inner wall of the thermal decomposition chamber 100. The central oil nozzles 140, located at the center part of the thermal decomposition chamber 100, are composed with three (3) nozzles designed to aim the central part of the thermal decom-position chamber 100, while the lower oil nozzles 150 are composed with three (3) nozzles located at the lower part of the thermal decomposition chamber 100, aiming at the bottom part of the thermal decomposition chamber 100. The number of nozzles is adjusted as needed to achieve higher efficacy.

The central oil nozzles 140 are connected to an auxiliary fuel tank 160 via central oilnozzles supply pipe 142. The amount of auxiliary fuel sprayed into the thermal decom-position chamber 100 is adjusted via central oil nozzles control valve 141. The lower oil nozzles 150 are also connected to the auxiliary fuel tank 160 via lower oil nozzles supply pipe 152, with lower oil nozzles control valve 151 installed along the lower oil nozzles supply pipe 152 to adjust the amount of auxiliary fuel sprayed into the thermal decomposition chamber 100.

The main purpose of the central oil nozzles 140 and the lower oil nozzles 150 is to evenly spray auxiliary fuel without any blind spot to assist the thermal decomposition process when the input materials are of different conditions, sizes, and hydration level. Auxiliary fuel is needed, particularly when the input materials have low calorific value due to lots of biodegradables or have higher hydration level for being medical wastes. In these cases, the central oil nozzles 140 and the lower oil nozzles 150 is utilized to evenly spray auxiliary fuel into the thermal decomposition chamber 100 to boost the thermal decomposition process of such materials without leaving any blind spots.

Another important feature of the central oil nozzles 140 and the lower oil nozzles 150is that each nozzle is meticulously controlled and operated separately from the other nozzles to earn the optimal result. With control panel 90 on the right side of the thermal decomposition chamber 100, it is possible to turn on only one central oil nozzle from the central oil nozzles 140, while it is also possible to turn on one nozzle each from the central oil nozzles 140 and the lower oil nozzles 150.

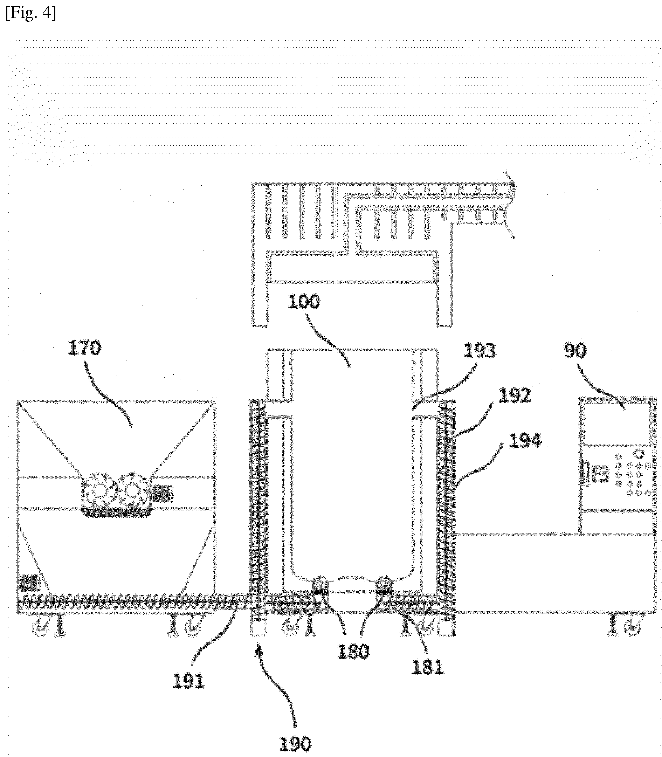

As illustrated in FIG. 4, there is the outer shredder 170 located at the left side of the thermal decomposition chamber 100. The outer shredder 170 acts as a shredder and a feeder of the present invention, where it homogenizes the input materials with differentconditions, sizes, and hydration level, by shredding them prior to being fed into the thermal decomposition chamber 100. Such prior shredding of input materials improves the treatment efficacy by homogenizing and uniformly mixing the input materials of various nature. It also improves the treatment capacity by reducing the volume of input material via shredding. Such shredded input materials are fed into the thermal decom- position chamber 100 via screw conveyor 190.

The inner shredder 180 is located at the bottom part of the thermal decomposition chamber 100. It is a very common phenomenon that the input materials are piled up together with the ash at the bottom, especially on the bottom edge of the thermal de- composition chamber 100, and are not being treated anymore. In order to prevent this piling up of untreated input materials and ash and to achieve complete thermal decom-position, the inner shredder 180 shreds those piled up input materials and ash, so as those shredded remaining input materials and ash is re-input into the thermal de- composition chamber 100 via the screw conveyor 190. The inner shredder 180 also be equipped with inner shredder inspection door 181.

It is also preferable that the shredding blades of the inner shredder 180 are of material with rust preventive characteristic and excellent heat and acid resistance since they are exposed to the high temperature above 850°C inside the thermal decomposition chamber 100.

Screw conveyor 190 is composed of horizontal screw conveyor 191 connecting the outer shredder 170 and the inner shredder 180 to vertical screw conveyor 192, thus the shredded materials are transported horizontally and then vertically up to input door 193 installed at the top part of the thermal decomposition chamber 100 and fed into thethermal decomposition chamber 100 through the input door 193.

It is also important to note that the screw conveyor 190 is covered with a layer of cooling pipe 194. The method of cooling is air-cooling or water-cooling, the cooling method is decided based on the unique circumstances of each in- stallation. The cooling pipe 194 is needed since the remaining input material and ash piled up on the bottom of the thermal decomposition chamber 100 are still of high tem-perature even after being shredded. In order to prevent unnecessary tear and wear of the screw conveyor 190, the cooling pipe 194 is installed to cool down such shredded remaining input material and ash.

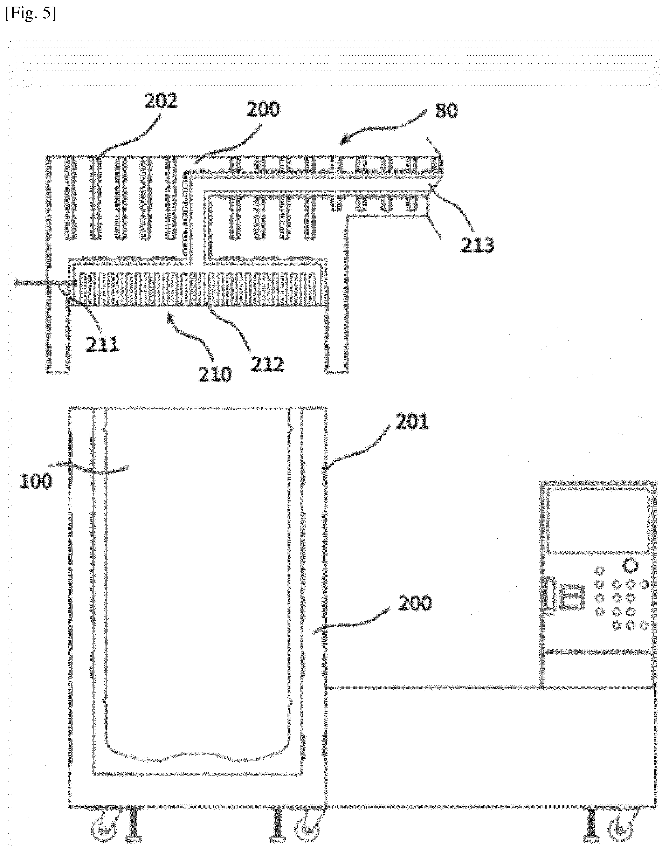

Moving on to FIG. 5, the thermal generation chamber 200 is composed around the thermal decomposition chamber 100 as well as on the upper cover 80 of the thermal decomposition chamber 100. The main purpose of the thermal generation chamber 200is to compose it with thermal generation modules 201 so as such thermal generation modules 201 can collect waste heat generated from thermal decomposition process andutilize such collected waste heat to generate electricity. The thermal generation modules 201 is placed along the inner walls of the thermal generation chamber
200. The thermal generation modules 201 also be installed on the thermal generation module plates 202, especially in the thermal generation chamber 200 composed on the upper cover 80 of the thermal decomposition chamber 100 since there are plenty of idle spaces, which are optimally utilized by installing number ofthe thermal generation module plates 202. The number of the thermal generation modules 201 and the thermal generation module plates 202 is adjusted to maximize the power generation.

The steam chamber 210 is composed on the upper cover 80 of the thermal decom-position chamber 100. The main purpose of steam chamber 210 is to utilize the waste heat generated from thermal decomposition process to produce steam and to send such steam to the separately installed boiler and steam turbine for further power generation. The steam chamber 210 produces steam by supplying water into the steam chamber 210 via water supply pipe 211. The water supplied into the steam chamber 210 is boiled and vaporized by waste heat from the thermal decomposition chamber 100, while heating pipe 212 installed inside the steam chamber 210 assists such steam production by providing extra source of heat. The steam produced from the steam chamber 210 is then transferred to the boiler and steam turbine via steam pipe 213. The steam also be transferred to different applications via steam pipe 213 where such steam is needed based on circumstances of each installation.

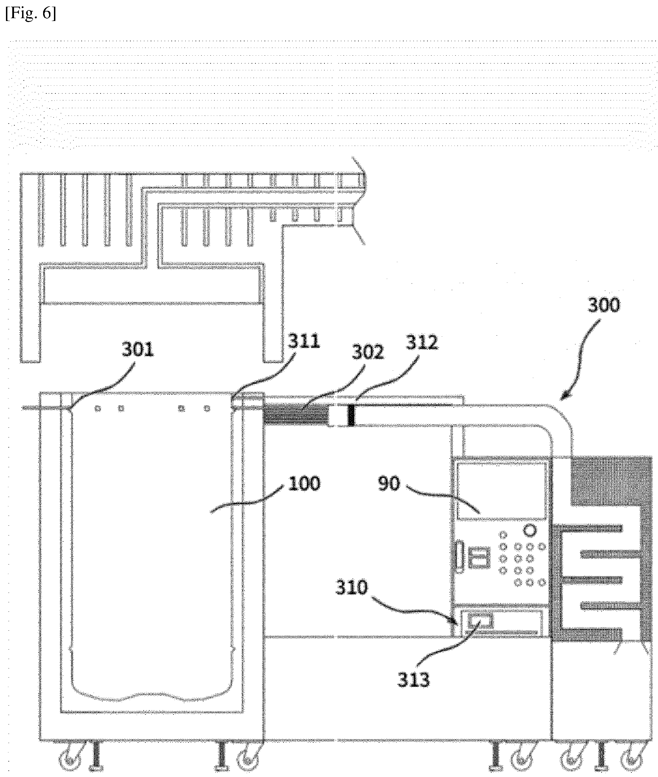

As illustrated in FIG. 6, the dust collector 300 is located on the right side of the thermal decomposition chamber 100. There are six (6) dust collecting holes 301 on thetop part of the inner wall of the thermal decomposition chamber 100, so as to collect the dust generated from thermal decomposition process when necessary. The number of dust collecting holes 301 is adjusted to maximize the dust collection efficacy based on the composition of input materials, since each input material generate different amount of dust. The dust generated from the process is collected by dust collecting holes 301 at the top part of the thermal decomposition chamber 100, which is then transferred to the dust collecting chamber 303 at the right side of the thermal decomposition chamber 100 via dust collecting pipes 302.

The monitoring device 310 located at the right side of the thermal decomposition chamber 100 also plays an important role for air pollution monitoring, with one (1) collecting hole 311 at the top part of inner wall of the thermal decomposition chamber 100, above the top-most air curtain created by 10th air inlets 123. After air pollutant materials are completely thermally decomposed by ten (10) layers of air curtains trapping them in an environment with ultra-high temperature above 850°C for more than two (2) seconds, the result monitored in real-time via the monitoring device 310. The samples are collected via collecting hole 311 and transferred via monitoring pipe 312 to the monitoring device 310 on the right side of the thermal de- composition chamber 100. The result of such thermal decomposition process is shown in the monitoring dashboard 313 on the monitoring device 310.

The control panel 90, that all illustrations show, is used to control every element of the present invention from the upper cover 80, the air-curtain maker 110, both the innerpipe 120 and the outer pipe 130, the central oil nozzles 140, the lower oil nozzles 150, the outer shredder 170, the inner shredder 180, the screw conveyor 190, the thermal generation chamber 200, the steam chamber 210, the dust collector 300, and monitoring device 310.

While certain embodiments of the present invention have been described in detail with reference to the drawings, the specific configuration is not limited to the above- stated embodiments, and it understood that we intend to cover the present invention design modifications, additions and substitutions, without departing from the scope of the present invention defined by the claims.

The drawings are to be regarded as illustrative in nature and not restrictive. For con- venience of understanding of the elements, sizes, or thicknesses in the drawings is exaggerated and enlarged, is expressed to be small, or is simplified for clarify of illustration.

Lastly, the same reference numerals used throughout the drawings and the description refer to the same or like elements or parts.

## Claims

1. An eco-friendly ultra-high temperature thermal decomposition system for waste-to-energy comprising:
a thermal decomposition chamber (100), in cylindrical shape and made with special castable mixture designed to endure ultra-high temperature up to 1,800°C, so as the thermal decomposition chamber (100) traps a ultra- high heat which is around 850°C to 1,250°C within the thermal decomposition chamber to maintain the ultra-high temperature of 850°C without any auxiliary fuel;
an air-curtain maker (110), installed at the center of the thermal decomposition chamber (100) and is double-layered with an inner Pipe (120) and an outer pipe (130), each of them connected to an inner blower (121) and an outer blower (131) respectively, both installed at a right side of the thermal decomposition chamber (100), while the air-curtain maker (110) has ten vertical levels of air inlets, where 1st to 9th air inlets are connected to the outer pipe (130) to create nine layers of air curtains while a top-most 10th air inlet (123) is connected to the inner pipe (120) to create top-most one (1) air curtain, which maintains the ultra- high temperature of above 850°C per each layer of air curtain by con- trolling a nine air curtains below, thus the air pollution is prevented by completely thermally decomposing a air pollutant materials within the thermal decomposition chamber (100) since a air curtains trap air pollutant materials within the thermal decomposition chamber (100) for more than two seconds of residence time;
a central oil nozzles (140) installed and a lower oil nozzles (150) installed on a innerwall of the thermal decomposition chamber (100), at the center part and at the lower part respectively, with three nozzles each to evenly spray auxiliary fuel when necessary;
an outer shredder (170) installed on a left side of the thermal decomposition chamber (100) to shred and homogenize a input materials prior to being fed;
an inner shredder (180) installed at a bottom part of the thermal decomposition chamber (100) to shred the input materials and ash remaining at the bottom so they are re-input into the thermal decomposition chamber (100);
a screw conveyor (190) composed of a horizontal screw conveyor (191) and a vertical screw conveyor (190), connecting the outer shredder (170) and the inner shredder (180) with the thermal decomposition chamber (100), so a shredded input materials and ash is automatically fed into the thermal decomposition chamber;
a thermal generation chamber (200) composed around the thermal decom- position chamber and on an upper cover (80) of the thermal Decomposition Chamber (100) to generate electricity by collecting waste heat generated fromthermal decomposition process through a thermal Generation Modules (201); a steam Chamber (210) installed on the upper cover (80) of the thermal decom- position chamber to generate further electricity by generating steam using waste heat generated from the thermal decomposition process to be transferred to separately installed boiler and steam turbine;
a dust collector (300) installed at the right side of the thermal decomposition chamber (100) to collect dust via a dust a collecting holes (301) at a top part of innerwall of the thermal decomposition chamber (100) when necessary; and
a monitoring device (310) installed at the right side of the thermal decom-position chamber to monitor the results of the thermal decomposition process in real time.

2. The eco-friendly ultra-high temperature thermal decomposition system for waste-to-energy according to claim 1, wherein the air curtain maker (110) is composed in a double-layered form with the outer pipe (130) and the inner pipe (120), installed at the center of the thermal decomposition chamber with ten vertical levels of air inlets, where 1st to 9th air inlets are connected with the outer pipe (130) and the top-most 10th Air Inlet (123) is connected with the inner Pipe (120), to create total of ten layers of air curtains, where the top-most one air curtain controls thebelow nine air curtains to maintain the ultra-high temperature above 850°C per each layer of air curtain so as to prevent any pollution by completely decomposing air pollutants by trapping them within the thermal decomposition chamber (100) with a temperature above 850°C for more than two seconds of residence time.

3. The eco-friendly ultra-high temperature thermal decomposition system for waste-to-energy according to claim 1, wherein the central oil nozzles (140) are installed on a central part of inner wall of thethermal decomposition chamber (100) with three nozzles, aiming at the center part of the thermal decomposition chamber (100); and
the lower oil nozzles (150) are installed on the lower port of inner wall of the thermal decomposition chamber (100) with three nozzles, aiming at the bottom part of the thermal decomposition chamber (100), which togetherwith a central oil nozzles (140) evenly spray auxiliary fuel without leavingany blind spot so the input materials with different conditions, sizes, and hydration level, are completely decomposed when needed.

4. The eco-friendly ultra-high temperature thermal decomposition system for waste-to-energy according to claim 1, wherein the outer shredder (170) is installed at the left side of the thermal decomposition chamber (100), connected with the thermal decomposition chamber (100) via the screw conveyor (190), to homogenize the input materials with different conditions, sizes, and hydration level, by shredding them prior to being fed into thethermal decomposition chamber (100), so as to reduce a volume of input materials and improve a treatment capacity; and
while the inner shredder (180) is installed at the bottom part of the thermal de-composition chamber, connected with the thermal decomposition chamber (100) via the screw conveyor (190), to shred the input materials and ash that are not being decomposed yet piling up at the bottom part of the thermal decomposition chamber (100), so as the screw conveyor (190) connecting the Inner Shredder (180) and the thermal decomposition chamber (100) re-inputsuch materials back to the system, thus even the ash is completely decomposed.

5. The eco-friendly ultra-high temperature thermal decomposition system for waste-to-energy according to claim 1, wherein the thermal generation chamber (200) is installed around the thermal decom- position chamber as well as on the upper cover (80) of the thermal decom- position chamber, where the thermal generation modules (201) are installed within, to effectively collect the waste heat generated from the thermal decomposition process to generate electricity; and
while the steam chamber (210) is installed on the upper cover (80) of the thermal de-composition chamber to further utilize waste heat from thermal decom-position process to generate steam so as such steam is sent to separately composed boiler and steam turbine via a steam Pipe (213) to generate even more electricity.

6. The eco-friendly ultra-high temperature thermal decomposition system for waste-to-energy according to claim 1, wherein the dust collector (300) is located at the right side of the thermal decomposition chamber (100) with the dust thecollecting holes (301) at the top part of inner wall of the thermal decomposition chamber (100), so as to dust generated from the thermal decomposition process is collected effectively when necessary; and
while the monitoring device (310) is installed at the right side of the thermal decomposition chamber with the collecting Hole (311) at the top part of inner wall of the thermal decomposition chamber (100), so as to monitor the results ofthe thermal decomposition process in real time; and
and a control panel (90) is installed at the right side of the thermal decom- position chamber to control every element of a present invention from the upper cover (80), air-curtain maker (110), central oil nozzles (140), lower oil nozzles (150), outer shredder (170), inner shredder (180), screw conveyor (190), thermal generation chamber (200), steam chamber (210), dust collector (300), to monitoring device (310).

## Patentansprüche

1. Ein umweltfreundliches Ultrahochtemperatur-Thermodekompositionssystem zur Energiegewinnung aus Abfall, bestehend aus:
einer thermischen Zersetzungskammer (100), in zylindrischer Form und hergestellt aus einer speziellen Gussmischung, die für extrem hohe Temperaturen von bis zu 1.800°C ausgelegt ist, so dass die thermische Zersetzungskammer (100) eine extrem hohe Wärme von etwa 850°C bis 1.250°C innerhalb der thermischen Zersetzungskammer hält, um die extrem hohe Temperatur von 850°C ohne zusätzlichen Brennstoff aufrechtzuerhalten;
einem Luftvorhanggenerator (110), der in der Mitte der thermischen Zersetzungskammer (100) installiert ist und aus einer inneren Rohrleitung (120) und einer äußeren Rohrleitung (130) besteht, die jeweils mit einem inneren Gebläse (121) und einem äußeren Gebläse (131) verbunden sind, die beide auf der rechten Seite der thermischen Zersetzungskammer (100) installiert sind, während der Luftvorhanggenerator (110) zehn vertikale Ebenen von Lufteinlässen aufweist, wobei der 1. bis 9. Lufteinlass mit dem Außenrohr (130) verbunden sind, um neun Schichten von Luftvorhängen zu erzeugen, während ein oberster 10. Lufteinlass (123) mit dem inneren Rohr (120) verbunden ist, um einen obersten (1) Luftvorhang zu erzeugen, der die ultrahohe Temperatur von über 850°C pro Luftvorhangschicht aufrechterhält, indem er die neun darunter liegenden Luftvorhänge steuert, wodurch die Luftverschmutzung durch vollständige thermische Zersetzung der Luftschadstoffe innerhalb der thermischen Zersetzungskammer (100) vollständig vermieden wird, da die Luftvorhänge die Luftschadstoffe innerhalb der thermischen Zersetzungskammer (100) für mehr als zwei Sekunden Verweildauer einfangen;
einer zentrale Öldüse (140) und eine untere Öldüse (150), die an der Innenwand der thermischen Zersetzungskammer (100) jeweils im mittleren und unteren Teil installiert sind, mit jeweils drei Düsen, um bei Bedarf gleichmäßig Hilfsbrennstoff zu versprühen;
einem äußeren Zerkleinerer (170), der auf der linken Seite der thermischen Zersetzungskammer (100) installiert ist, um die Eingangsmaterialien vor der Zuführung zu zerkleinern und zu homogenisieren;
einem innerer Zerkleinerer (180), der am Boden der thermischen Zersetzungskammer (100) angebracht ist, um die eingegebenen Materialien und die am Boden verbleibende Asche zu zerkleinern, damit sie wieder in die thermische Zersetzungskammer (100) eingegeben werden können;
einem Schneckenförderer (190), der aus einem horizontalen Schneckenförderer (191) und einem vertikalen Schneckenförderer (190) besteht und den äußeren Zerkleinerer (170) und den inneren Zerkleinerer (180) mit der thermischen Zersetzungskammer (100) verbindet, so dass zerkleinerte Eingangsmaterialien und Asche automatisch in die thermische Zersetzungskammer zugeführt werden;
einer Wärmeerzeugungskammer (200), die um die thermische Zersetzungskammer herum und auf einer oberen Abdeckung (80) der thermischen Zersetzungskammer (100) angeordnet ist, um durch Sammeln der beim thermischen Zersetzungsprozess entstehenden Abwärme mittels Wärmeerzeugungsmodulen (201) Strom zu erzeugen; einer Dampfkammer (210), die auf der oberen Abdeckung (80) der thermischen Zersetzungskammer installiert ist, um weiteren Strom zu erzeugen, indem mit der beim thermischen Zersetzungsprozess entstehenden Abwärme Dampf erzeugt wird, der an einen separat installierten Kessel und eine Dampfturbine übertragen wird;
einem Staubabscheider (300), der auf der rechten Seite der thermischen Zersetzungskammer (100) installiert ist, um bei Bedarf Staub über Staubauffanglöcher (301) im oberen Teil der Innenwand der thermischen Zersetzungskammer (100) aufzufangen; und
einer Überwachungsvorrichtung (310), die auf der rechten Seite der thermischen Zersetzungskammer installiert ist, um die Ergebnisse des thermischen Zersetzungsprozesses in Echtzeit zu überwachen.

2. Das umweltfreundliche Ultrahochtemperatur-Thermodekompositionssystem zur Energiegewinnung aus Abfall gemäß Anspruch 1, wobei der Luftvorhanggenerator (110) in einer doppelschichtigen Form mit dem Außenrohr (130) und dem Innenrohr (120) aufgebaut ist, in der Mitte der Thermodekompositionskammer mit zehn vertikalen Ebenen von Lufteinlässen installiert ist, wobei der 1. bis 9. Lufteinlass mit dem Außenrohr (130) verbunden ist und der oberste 10. Lufteinlass (123) mit dem Innenrohr (120) verbunden, um insgesamt zehn Luftvorhangschichten zu bilden, wobei der oberste Luftvorhang die darunter liegenden neun Luftvorhänge steuert, um die ultrahohe Temperatur von über 850°C pro Luftvorhangschicht aufrechtzuerhalten, um jegliche Verschmutzung zu verhindern, indem Luftschadstoffe vollständig zersetzt werden, indem sie in der Thermodekompositionskammer (100) mit einer Temperatur von über 850°C für mehr als zwei Sekunden Verweildauer eingeschlossen werden.

3. Das umweltfreundliche Ultrahochtemperatur-Thermodekompositionssystem zur Energiegewinnung aus Abfall gemäß Anspruch 1, wobei die zentralen Öldüsen (140) an einem zentralen Teil der Innenwand der Thermodekompositionskammer (100) mit drei Düsen installiert sind, die auf den mittleren Teil der Thermodekompositionskammer (100) gerichtet sind; und
die unteren Öldüsen (150) sind an der unteren Öffnung der Innenwand der thermischen Zersetzungskammer (100) mit drei Düsen angebracht, die auf den unteren Teil der thermischen Zersetzungskammer (100) gerichtet sind und zusammen mit einer zentralen Öldüse (140) gleichmäßig Hilfsbrennstoff versprühen, ohne einen toten Winkel zu hinterlassen, so dass die Eingangsmaterialien mit unterschiedlichen Bedingungen, Größen und Hydratationsgraden bei Bedarf vollständig zersetzt werden.

4. Das umweltfreundliche Ultrahochtemperatur-Thermodekompositionssystem zur Energiegewinnung aus Abfall gemäß Anspruch 1, wobei der äußere Zerkleinerer (170) auf der linken Seite der Thermodekompositionskammer (100) installiert ist und über den Schneckenförderer (190) mit der Thermodekompositionskammer (100) verbunden ist, um die Eingangsmaterialien mit unterschiedlichen Zuständen, Größen und Hydratationsgraden zu homogenisieren, indem sie vor der Zuführung in die Thermodekompositionskammer (100) zerkleinert werden, um so das Volumen der Eingangsmaterialien zu reduzieren und die Behandlungskapazität zu verbessern; und
während der innere Zerkleinerer (180) im unteren Teil der thermischen Zersetzungskammer installiert ist und über den Schneckenförderer (190) mit der Thermodekompositionskammer (100) verbunden ist, um die Eingangsstoffe und die Asche, die noch nicht zersetzt sind und sich im unteren Teil der Thermodekompositionskammer (100) ansammeln, zu zerkleinern, sodass der Schneckenförderer (190), der den inneren Zerkleinerer (180) und die Thermodekompositionskammer (100) verbindet, diese Materialien wieder in das System zurückführt, wodurch sogar die Asche vollständig zersetzt wird.

5. Das umweltfreundliche Ultrahochtemperatur-Thermodekompositionssystem zur Energiegewinnung aus Abfall gemäß Anspruch 1, wobei die Wärmeerzeugungskammer (200) um die Thermodekompositionskammer herum sowie auf der oberen Abdeckung (80) der Thermodekompositionskammer installiert ist, in der die Wärmeerzeugungsmodule (201) installiert sind, um die beim Thermodekompositionsprozess entstehende Abwärme effektiv zu sammeln und Strom zu erzeugen; und
während die Dampfkammer (210) auf der oberen Abdeckung (80) der Thermodekompositionskammer installiert ist, um die Abwärme aus dem thermischen Zersetzungsprozess weiter zu nutzen, um Dampf zu erzeugen, der über eine Dampfleitung (213) zu einem separat angeordneten Kessel und einer Dampfturbine geleitet wird, um noch mehr Strom zu erzeugen.

6. Das umweltfreundliche Ultrahochtemperatur-Thermodekompositionssystem zur Energiegewinnung aus Abfall gemäß Anspruch 1, wobei sich der Staubabscheider (300) auf der rechten Seite der Thermodekompositionskammer (100) befindet, wobei sich die Staubabscheiderlöcher (301) im oberen Teil der Innenwand der Thermodekompositionskammer (100) befinden, so dass der beim Thermodekompositionsprozess entstehende Staub bei Bedarf effektiv gesammelt wird; und
während die Überwachungsvorrichtung (310) auf der rechten Seite der Thermodekompositionskammer mit der Auffangöffnung (311) am oberen Teil der Innenwand der Thermodekompositionskammer (100) installiert ist, um die Ergebnisse des thermischen Zersetzungsprozesses in Echtzeit zu überwachen; und
und ein Bedienfeld (90) auf der rechten Seite der Thermodekompositionskammer installiert ist, um jedes Element der vorliegenden Erfindung von der oberen Abdeckung (80), dem Luftvorhanggenerator (110), den zentralen Öldüsen (140), den unteren Öldüsen (150), dem äußeren Zerkleinerer (170), dem inneren Zerkleinerer (180), Schneckenförderer (190), Wärmeerzeugungskammer (200), Dampfkammer (210), Staubabscheider (300) bis hin zur Überwachungsvorrichtung (310).

## Revendications

1. Un système de décomposition thermique à ultra-haute température écologique pour la valorisation énergétique des déchets comprenant :
une chambre de décomposition thermique (100), de forme cylindrique et fabriquée avec un mélange de coulée spécial conçu pour supporter une ultra-haute température jusqu'à 1 800 °C, de sorte que la chambre de décomposition thermique (100) emprisonne une chaleur ultra-élevée qui est d'environ 850 °C à 1 250 °C à l'intérieur de la chambre de décomposition thermique pour maintenir l'ultra-haute température de 850 °C sans aucun combustible auxiliaire ;
un générateur de rideau d'air (110), installé au centre de la chambre de décomposition thermique (100) et à double couche avec un tuyau intérieur (120) et un tuyau extérieur (130), chacun d'eux connecté respectivement à un ventilateur intérieur (121) et un ventilateur extérieur (131), tous deux installés sur un côté droit de la chambre de décomposition thermique (100), tandis que le générateur de rideau d'air (110) comporte dix niveaux verticaux d'entrées d'air, où les 1ère à 9ème entrées d'air sont connectées au tuyau extérieur (130) pour créer neuf couches de rideaux d'air tandis qu'une 10ème entrée d'air supérieure (123) est connectée au tuyau intérieur (120) pour créer un (1) rideau d'air supérieur, qui maintient l'ultra-haute température au-dessus de 850 °C par couche de rideau d'air en contrôlant les neuf rideaux d'air inférieurs, ainsi la pollution atmosphérique est évitée en décomposant thermiquement complètement les matériaux polluants atmosphériques à l'intérieur de la chambre de décomposition thermique (100) puisque les rideaux d'air emprisonnent les matériaux polluants atmosphériques à l'intérieur de la chambre de décomposition thermique (100) pendant plus de deux secondes de temps de séjour ;
des buses à huile centrales (140) installées et des buses à huile inférieures (150) installées sur une paroi intérieure de la chambre de décomposition thermique (100), respectivement dans la partie centrale et dans la partie inférieure, avec trois buses chacune pour pulvériser uniformément du combustible auxiliaire si nécessaire ;
un broyeur extérieur (170) installé sur un côté gauche de la chambre de décomposition thermique (100) pour broyer et homogénéiser les matériaux d'entrée avant leur alimentation ;
un broyeur intérieur (180) installé dans une partie inférieure de la chambre de décomposition thermique (100) pour broyer les matériaux d'entrée et les cendres restant au fond afin qu'ils soient réintroduits dans la chambre de décomposition thermique (100) ;
un convoyeur à vis (190) composé d'un convoyeur à vis horizontal (191) et d'un convoyeur à vis vertical (190), reliant le broyeur extérieur (170) et le broyeur intérieur (180) à la chambre de décomposition thermique (100), de sorte que les matériaux d'entrée broyés et les cendres sont automatiquement alimentés dans la chambre de décomposition thermique ;
une chambre de génération thermique (200) composée autour de la chambre de décomposition thermique et sur un couvercle supérieur (80) de la chambre de décomposition thermique (100) pour générer de l'électricité en collectant la chaleur résiduelle générée par le processus de décomposition thermique à travers des modules de génération thermique (201) ; une chambre à vapeur (210) installée sur le couvercle supérieur (80) de la chambre de décomposition thermique pour générer davantage d'électricité en produisant de la vapeur utilisant la chaleur résiduelle générée par le processus de décomposition thermique pour être transférée vers une chaudière et une turbine à vapeur installées séparément ;
un collecteur de poussières (300) installé sur le côté droit de la chambre de décomposition thermique (100) pour collecter les poussières via des trous de collecte de poussières (301) dans une partie supérieure de la paroi intérieure de la chambre de décomposition thermique (100) si nécessaire ; et
un dispositif de surveillance (310) installé sur le côté droit de la chambre de décomposition thermique pour surveiller les résultats du processus de décomposition thermique en temps réel.

2. Le système de décomposition thermique à ultra-haute température écologique pour la valorisation énergétique des déchets selon la revendication 1, dans lequel le générateur de rideau d'air (110) est composé sous une forme à double couche avec le tuyau extérieur (130) et le tuyau intérieur (120), installé au centre de la chambre de décomposition thermique avec dix niveaux verticaux d'entrées d'air, où les 1ère à 9ème entrées d'air sont connectées au tuyau extérieur (130) et la 10ème entrée d'air supérieure (123) est connectée au tuyau intérieur (120), pour créer un total de dix couches de rideaux d'air, où le rideau d'air supérieur contrôle les neuf rideaux d'air inférieurs pour maintenir l'ultra-haute température au-dessus de 850 °C par couche de rideau d'air afin de prévenir toute pollution en décomposant complètement les polluants atmosphériques en les emprisonnant à l'intérieur de la chambre de décomposition thermique (100) avec une température supérieure à 850 °C pendant plus de deux secondes de temps de séjour.

3. Le système de décomposition thermique à ultra-haute température écologique pour la valorisation énergétique des déchets selon la revendication 1, dans lequel les buses à huile centrales (140) sont installées sur une partie centrale de la paroi intérieure de la chambre de décomposition thermique (100) avec trois buses, visant la partie centrale de la chambre de décomposition thermique (100) ; et
les buses à huile inférieures (150) sont installées sur la partie inférieure de la paroi intérieure de la chambre de décomposition thermique (100) avec trois buses, visant la partie inférieure de la chambre de décomposition thermique (100), qui, conjointement avec les buses à huile centrales (140), pulvérisent uniformément du combustible auxiliaire sans laisser aucune zone aveugle afin que les matériaux d'entrée avec différentes conditions, tailles et niveaux d'hydratation soient complètement décomposés si nécessaire.

4. Le système de décomposition thermique à ultra-haute température écologique pour la valorisation énergétique des déchets selon la revendication 1, dans lequel le broyeur extérieur (170) est installé sur le côté gauche de la chambre de décomposition thermique (100), connecté à la chambre de décomposition thermique (100) via le convoyeur à vis (190), pour homogénéiser les matériaux d'entrée avec différentes conditions, tailles et niveaux d'hydratation, en les broyant avant leur alimentation dans la chambre de décomposition thermique (100), afin de réduire un volume de matériaux d'entrée et améliorer une capacité de traitement ; et
tandis que le broyeur intérieur (180) est installé dans la partie inférieure de la chambre de décomposition thermique, connecté à la chambre de décomposition thermique (100) via le convoyeur à vis (190), pour broyer les matériaux d'entrée et les cendres qui ne sont pas encore décomposés et s'accumulent dans la partie inférieure de la chambre de décomposition thermique (100), de sorte que le convoyeur à vis (190) reliant le broyeur intérieur (180) et la chambre de décomposition thermique (100) réintroduit ces matériaux dans le système, ainsi même les cendres sont complètement décomposées.

5. Le système de décomposition thermique à ultra-haute température écologique pour la valorisation énergétique des déchets selon la revendication 1, dans lequel la chambre de génération thermique (200) est installée autour de la chambre de décomposition thermique ainsi que sur le couvercle supérieur (80) de la chambre de décomposition thermique, où les modules de génération thermique (201) sont installés à l'intérieur, pour collecter efficacement la chaleur résiduelle générée par le processus de décomposition thermique afin de générer de l'électricité ; et
tandis que la chambre à vapeur (210) est installée sur le couvercle supérieur (80) de la chambre de décomposition thermique pour utiliser davantage la chaleur résiduelle du processus de décomposition thermique pour générer de la vapeur afin que cette vapeur soit envoyée vers une chaudière et une turbine à vapeur composées séparément via un tuyau de vapeur (213) pour générer encore plus d'électricité.

6. Le système de décomposition thermique à ultra-haute température écologique pour la valorisation énergétique des déchets selon la revendication 1, dans lequel le collecteur de poussières (300) est situé sur le côté droit de la chambre de décomposition thermique (100) avec les trous de collecte de poussières (301) dans la partie supérieure de la paroi intérieure de la chambre de décomposition thermique (100), afin que les poussières générées par le processus de décomposition thermique soient collectées efficacement si nécessaire ; et
tandis que le dispositif de surveillance (310) est installé sur le côté droit de la chambre de décomposition thermique avec le trou de collecte (311) dans la partie supérieure de la paroi intérieure de la chambre de décomposition thermique (100), afin de surveiller les résultats du processus de décomposition thermique en temps réel ; et
un panneau de commande (90) est installé sur le côté droit de la chambre de décomposition thermique pour contrôler chaque élément de la présente invention du couvercle supérieur (80), du générateur de rideau d'air (110), des buses à huile centrales (140), des buses à huile inférieures (150), du broyeur extérieur (170), du broyeur intérieur (180), du convoyeur à vis (190), de la chambre de génération thermique (200), de la chambre à vapeur (210), du collecteur de poussières (300), au dispositif de surveillance (310).
